# EUROPÄISCHE PATENTSCHRIFT

(11) **EP 0 761 333 B1**
(45) Veröffentlichungstag und Bekanntmachung des Hinweises auf die Patenterteilung: **08.11.2000**
(21) Anmeldenummer: 96112838.6
(22) Anmeldetag: 09.08.1996
(51) Int. Cl.: B21C 23/14

(54) **Geschweisstes Strangpressprofil**
Welded extrusion profile
Profilé extrudé soudé

(30) Priorität: 12.08.1995 DE 29513012 U; 29.02.1996 DE 19607675
(43) Veröffentlichungstag der Anmeldung: 12.03.1997
(73) Patentinhaber: Corus Aluminium Profiltechnik Bonn GmbH, 53117 Bonn (DE)
(72) Erfinder: Mechsner, Klaus, 56566 Neuwied (DE); Weingartz, Karl, 53332 Bornheim (DE)
(74) Vertreter: Müller-Wolff, Thomas, Dipl.-Ing.

(56) Entgegenhaltungen:
- EP-A- 0 631 925
- DE-C- 586 512
- US-A- 3 108 663
- US-A- 3 168 777
- PATENT ABSTRACTS OF JAPAN vol. 95, no. 003 & JP-A-07 060477 (SHOWA ALUM CORP), 7.März 1995,

## Beschreibung

Die Erfindung betrifft ein geschweißtes Strangpreßprofil, bestehend aus mindestens zwei Einzelprofilen, die an der oder den Kontaktstellen mindestens eine angeformte Schweißfuge mit einer Badstütze aufweisen.

Strangpreßprofile der eingangs genannten Art sind aus JP-A-07 060477 bekannt. Zur Herstellung einer mechanischen Verklammerung wird dort um die Schweißfuge herum eine plastische Verklammerung vorgenommen. Dies soll einen Verzug der Teile nach dem Schweißen verhindern.

Bei den Strangpreßprofilen ist es ferner üblich, eine Nahtfugenvorbereitung und Badsicherung in die Profilquerschnitte zu integrieren (siehe Aluminium-Taschenbuch, 14. Auflage, Seite 820 ff). Die Schweißbadstütze dient dabei zur Stützung des flüssigen Metalls und verhindert ein Wegfließen des Schweißzusatzstoffes aus der Schweißfuge während des Schweißvorganges.

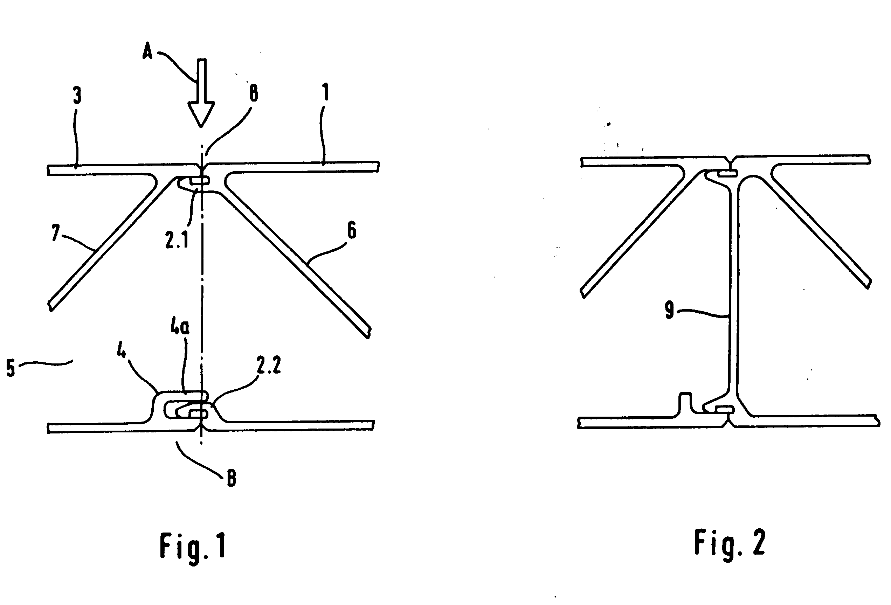

Bei Mehrkammer-Hohlprofilen, insbesondere bei Hohlprofilen mit Fachwerkquerschnitt, besteht die Gefahr, daß beim Schweißen durch die eingebrachte Wärme ein Versatz zwischen den außenliegenden Hohlprofilteilen entsteht. Deshalb wurde bisher für maßhaltige Teile in der Nähe der Schweißverbindung ein Steg eingezogen, der die außenliegenden Seiten des Hohlprofilquerschnittes miteinander verbindet. Es war jedoch erforderlich, diesen Steg unmittelbar in die Nähe der Schweißbadstütze zu bringen, damit er die gewünschte Funktion erfüllen kann (siehe Figur 2).

Hierdurch wurde der Aufwand für die Herstellung der Hohlprofilquerschnitte vergrößert. In den Fällen, wo aus dynamischen oder statischen Gründen kein Steg erforderlich war, wurde auch das Gewicht der Strangpreßprofilquerschnitte unnötig erhöht.

Bei langgestreckten, ein- oder mehrkammrigen Profilen gibt es immer wieder Schwierigkeiten bei der genauer Ausrichtung der Profile vor dem Schweißen. Oftmals haben die Profilteile beim Transport einen Verzug erlitten oder sind aufgrund dünner Wanddicken leicht verformbar, so daß schon geringfügige Unebenheiten die Planlage der zu verbindenden Profile behindert. Auch bei der Bearbeitung selber können Erschütterungen auftreten, die das Verrutschen der bereits positionierten Profileinzelteile bewirken.

Aufgabe der vorliegenden Erfindung ist es, bei Strangpreßprofilen der eingangs genannten Art die konstruktive Ausbildung der Schweißfuge derart zu verbessern, daß eine Abstützung vor der Fertigung nicht mehr erforderlich ist und ein Verziehen von bearbeiteten, geschweißten Profilquerschnitten mit Sicherheit verhindert wird.

Die Aufgabe wird durch die im Hauptanspruch angegebenen Merkmale gelöst. Vorteilhafte Weiterbildungen des Erfindungsgedankens sind den Unteransprüchen zu entnehmen.

Es hat sich gezeigt, daß durch eine gabelförmige Ausbildung einer oder mehrerer Strangpreßprofilenden verhindert wird, daß ein zu großer Versatz an den zu verbindenden Profilflächen auftritt.

Die Toleranzen in den großflächigen Profiltafeln können nun leicht eingehalten werden, da ein Versatz an den beiden Enden der Fügestellen nicht mehr auftreten kann.

Die unter die Schweißbadstütze greifende, hakenförmige Verlängerung verhindert das Hochheben der Profilendfläche, da sich die beiden gabelförmigen Teile miteinander verklammern und dabei gegenseitig stützen.

Grundsätzlich ist es möglich, für das erfindungsgemäße Strangpreßprofil verschiedene Schweißverfahren einzusetzen. So kann auch jedes Schmelzschweißverfahren angewendet werden, beispielsweise das MIG, WIG oder PLASMASCHWEIßEN. Auch können offene und geschlossene Strangpreßprofile als Einzelprofile mit der erfindungsgemäß ausgestalteten Verbindungsstelle versehen werden. Je nach Art und Höhe des erwarteten Schweißverzuges, der als Folge der Schweißtemperatur auftreten kann, muß die Gabelstütze 4 verlängert oder verkürzt werden.

Ein weiterer Vorteil des erfindungsgemäß ausgebildeten Strangpreßprofils ist die bessere Spannbarkeit bei der Bearbeitung. Beispielsweise wird in der Ausführung mit Fachwerkstreben 6,7 gemäß Figur 1 eine hohe Steifigkeit am Knotenpunkt 8 genutzt, um eine Spannkraft in Pfeilrichtung A auf das Strangpreßprofil auszuüben. Nach der Bearbeitung durch ein Fügeverfahren wie zum Beispiel Schweißen kann dann das Strangpreßprofil gewendet werden und die gegenüberliegende Seite B eingespannt und gefügt werden. Die Stabilität der über Gabelstützen gesicherten Verbindung ist ausreichend, um die Spannkräfte auch ohne Mittelstütze aufzunehmen, die bisher zur Bearbeitung von derartigen Profilen (insbesondere mittels Spannvorrichtungen) für erforderlich angesehen wurde.

Im folgenden wird die Erfindung anhand eines Ausführungsbeispieles und eines Vergleichsbeispieles näher erläutert. Es zeigen:
- Fig. 1: erfindungsgemäße Ausbildung eines für die Schweißung vorbereiteten Strangpreßprofiles;
- Fig. 2: Vergleichsbeispiel nach dem Stand der Technik;
- Fig. 3: erfindungsgemäße Ausbildung einer Kontaktzone mit mehreren Gabelstützen;
- Fig. 4: Beispiel für eine Mehrfachgabel, die erfindungsgemäß an Hohlprofilen angeordnet ist;

In Figur 1 ist ein erstes Einzelprofil 1 mit angeformter Badstütze 2.1, 2.2 und einer an dem zweiten Einzelprofil 3 angeformten Gabelstütze 4 dargestellt. Die Badstütze 2.2 ist in die Gabelstütze 4 eingeführt. Dadurch kann die im Profilinnenraum 5 angeordnete Gabelsprosse der Gabelstütze 4 die Badstütze 2.2 hakenförmig umgreifen. Die Badstütze 2.1 greift unter das Auslaufende des Einzelprofils 3.

Die Anordnung der Profileinzelteile ist derart gestaltet, daß zumindest der eine Schenkel der Gabelstütze 4 mit der Profilaußenseite fluchtet, wobei der fluchtende Schenkel der Gabelstütze 4 gegenüber der Gabelsprosse 4a verkürzt ist. Mit Gabelsprosse ist der zu Profilinnenseite gerichtete Teil der Gabelstütze bezeichnet. Mit 6, 7 sind die Fachwerkstreben eines Hohlprofilträgers angegeben.

In Figur 2 ist ein Vergleichsbeispiel nach dem Stand der Tecknik dargestellt. Hier wird eine Mittel stütze 9 zwischen den Profilaußenseiten zur Verbindung und Abstützung der offenen Profilkanten eingefügt. Dadurch ist das Vergleichsprofil wesentlich schwerer als das erfindungsgemäße Strangpreßprofil.

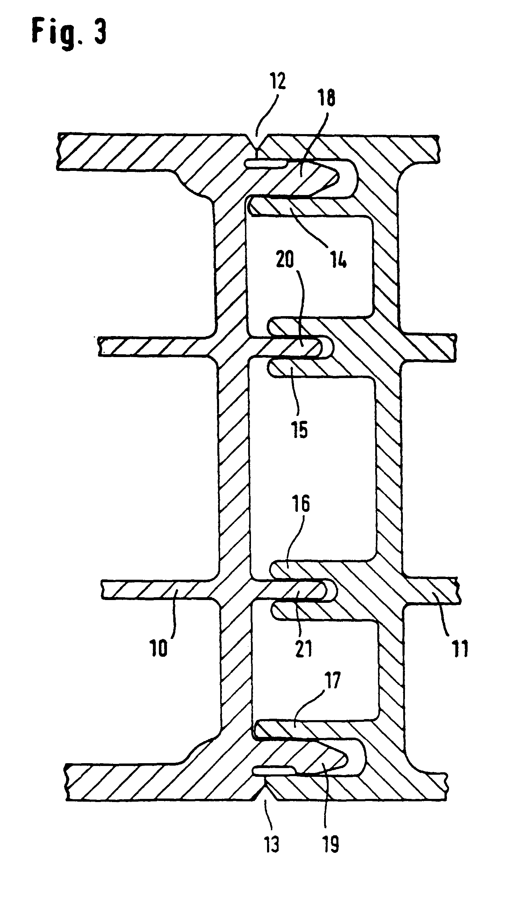

In Figur 3 ist eine mehrfache Gabelverbindung in einer Kontaktzone von zwei Hohlprofilstrangpreßteilen 10, 11 dargestellt. Oben und unten ist jeweils ein Schweißstoß 12, 13 (V-förmig) erkennbar. In den Gabelstützen 14, 15, 16, 17 sind zwei Badstützen 18, 19 und zwei Kontaktstützen 20, 21 eingeführt. Dadurch ist eine sichere Positionierung der Profileinzelteile gewährleistet.

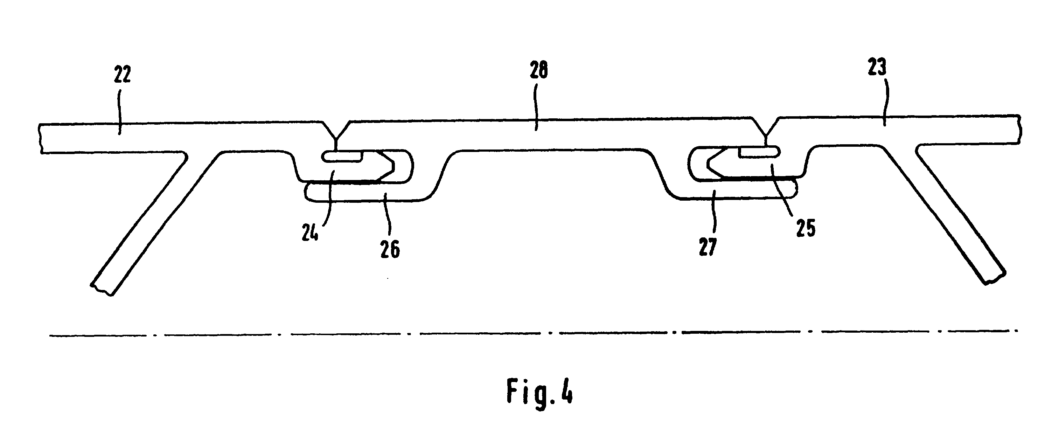

Die Darstellung nach Figur 4 zeigt einen Teilquerschnitt durch zwei Einzelprofile 22, 23 mit jeweils einer Badstütze 24, 25, die von jeweils einer Gabelstütze 26, 27 umgriffen wird. Das mittlere Profilteil 28, besteht also aus einer Mehrfachgabel mit jeweils zu einem Einzelprofil hin ausgerichteten Gabelstützen 26, 27. Selbstverständlich kann dieses Mittelteil auch als Hohlprofil ausgebildet sein oder, wie dargestellt, als Strangpreßprofilabschnitt.

## Patentansprüche

1. Geschweißtes Strangpreßprofil, bestehend aus mindestens zwei geschlossenen Einzelprofilen (1), (3), die an den Kontaktstellen mindestens eine angeformte Schweißfuge mit einer Badstütze aufweisen, wobei die Einzelprofile (1), (3) aus Hohlprofilstrangpreßteilen mit einer Außen- und einer Innenseite bestehen,
dadurch gekennzeichnet,
daß die an der Außenseite (B) am ersten Einzelprofil angeformte Badstütze (2) in einer an dem zweiten Einzelprofil (3) angeformten Gabelstütze (4) geführt ist, welche eine Gabelsprosse (4a) zur Profilinnenseite und einen Schenkel zur Profilaußenseite aufweist, wobei
der Schenkel der Gabelstütze (4) gegenüber der Gabelsprosse (4a) verkürzt ist.

2. Geschweißtes Strangpreßprofil nach Anspruch 1,
dadurch gekennzeichnet,
daß bei mehreren Kontaktstellen entweder eine Badstütze (2.1, 2.2) oder eine Kontaktstütze (20, 21) in die Gabelstütze (4) hineinragt.

3. Geschweißtes Strangpreßprofil nach Anspruch 1 oder 2,
dadurch gekennzeichnet,
daß jede Kontaktstütze (20, 21) eine formschlüssige Verbindung zur Gabelstütze (4, 26, 27) herstellt.

## Claims

1. A welded extruded profile consisting of at least two closed individual profiles (1), (3) which, in the points of contact, comprise at least one formed-on welding groove with a pool support, with the individual profiles (1), (3) consisting of extruded parts with hollow profiles and with an outer face and an inner face,
characterised in
that the pool support (2) formed on to the outer face (B) of the first individual profile is guided in a forked support (4) which is formed-on at the second individual profile (3) and which comprises a fork prong (4a) towards the inner profile face and an arm towards the outer profile face, with the arm of the forked support (4) being shortened relative to the fork prong (4a) .

2. A welded extruded profile according to claim 1,
characterised in
that, in the case of a plurality of contact points, either a pool support (2.1, 2.2) or a contact support (20, 21) projects into the forked support (4).

3. A welded extruded profile according to claim 1 or 2,
characterised in
that each contact support (20, 21) produces a form-fitting connection relative to the forked support (4, 26, 27).

## Revendications

1. Profilé extrudé soudé, constitué par au moins deux profilés individuels fermés (1, 3) qui présentent au niveau des emplacements de contact au moins une jointure de soudure conformée avec un soutien de bain, dans lequel les profilés individuels (1, 3) sont constitués par des parties extrudées de profilé creux qui présentent une face intérieure et une face extérieure,
caractérisé en ce que le soutien de bain (2) formé sur la face extérieure (B) sur le premier profilé individuel est mené dans un support à fourche (4) formé sur le deuxième profilé individuel (3), ledit support à fourche comprenant un barreau de fourche (4a) ouvert à la face intérieure du profilé et un bras vers la face extérieure du profilé, et en ce que le bras du support à fourche (4) est raccourci par rapport au barreau de fourche (4a).

2. Profilé extrudé soudé selon la revendication 1,
caractérisé en ce que dans le cas de plusieurs emplacements de contact, soit un soutien de bain (2.1, 2.2) soit un support de contact (20, 21) pénètre dans le support à fourche (4).

3. Profilé extrudé soudé selon l'une ou l'autre des revendications 1 et 2,
caractérisé en ce que chaque support de contact (20, 21) établit une jonction à coopération de formes vers le support à fourche (4, 26, 27).
